# EUROPÄISCHE PATENTSCHRIFT

(11) **EP 0 453 584 B1**
(45) Veröffentlichungstag und Bekanntmachung des Hinweises auf die Patenterteilung: **07.09.1994**
(21) Anmeldenummer: 90107274.4
(22) Anmeldetag: 17.04.1990
(51) Int. Cl.: B60R 21/32, B60R 22/46

(54) **Ansteuermechanismus für Rückstrammeinrichtungen in Fahrzeugen**
Triggering mechanism for tensioning devices in vehicles
Mécanisme de déclenchement pour dispositifs tendeurs dans des véhicules

(43) Veröffentlichungstag der Anmeldung: 30.10.1991
(73) Patentinhaber: TRW REPA GMBH, 73553 Alfdorf (DE)
(72) Erfinder: Föhl, Artur, 7060 Schorndorf (DE)
(74) Vertreter: Degwert, Hartmut, Dipl.-Phys.

(56) Entgegenhaltungen:
- BE-A- 524 187
- DE-A- 3 032 201
- DE-A- 3 234 422
- FR-A- 2 374 188
- FR-A- 2 400 450

## Beschreibung

Die Erfindung betrifft einen Ansteuermechanismus für Rückstrammeinrichtungen eines Sicherheitsgurt-Rückhaltesystems oder für Gassack-Rückhaltesysteme in Fahrzeugen, mit einer in einem Gehäuse schwenkbar oder translationsverschiebbar gelagerten, fahrzeugsensitiven Trägheitsmasse und einem Ansteuerelement, das mit dem Rückhaltesystem in Wirkverbindung steht.

Für die Ansteuerung von Rückstrammeinrichtungen eines Sicherheitsgurt-Rückhaltesystems oder eines Gassack-Rückhaltesystems in Fahrzeugen wird eine Auslösevorrichtung benötigt. Besonders leistungsfähig sind elektrische Ansteuersysteme, die über eine aufwendige Elektronik verfügen, welche die Fahrzeugverzögerung auswertet. Die in einem Fahrzeug beim Aufprall auftretenden Verzögerungswerte können je nach Fahrzeugtyp sehr unterschiedlich sein. Jedes Fahrzeug besitzt seine eigene "Crash-Kurve", welche den Verlauf der Verzögerungswerte über die Zeit wiedergibt. Um eine unbeabsichtigte Auslösung zu verhindern, werden nur Verzögerungswerte berücksichtigt, die einen bestimmten Schwellwert von beispielsweise 4 g überschreiten. Kurzzeitige Verzögerungsspitzen, wie sie durch Stöße oder dgl. auftreten können, dürfen nicht zu einer Auslösung führen. Daher werden die gemessenen Verzögerungswerte über die Zeit integriert. Die Auslösung erfolgt erst bei einem bestimmten Wert des Integrals, der von Fahrzeug zu Fahrzeug verschieden sein kann. Mittels elektronischer Schaltungen ist es ohne Schwierigkeiten möglich, die Auslösung genau bei einem bestimmten Wert des Integrals zu veranlassen. Auch bereitet es keine Schwierigkeiten, die Auslösekriterien einer gegebenen Elektronikschaltung an geänderte Umstände oder Fahrzeugtypen anzupassen.

Für jedes elektrisch angesteuerte Rückstrammsystem oder Gassack-Rückhaltesystem wird aber eine eigene elektrische Ansteuerleitung benötigt, was einen erheblichen Material- und Montageaufwand zur Folge hat.

Kostenmäßig günstig sind mechanische Ansteuersysteme, die jeder Rückstrammeinrichtung bzw. jedem Gassack-Rückhaltesystem individuell räumlich und funktionell zugeordnet werden können. So zeigt die gattungsbildende DE-A-32 34 422 einen solchen Ansteuermechanismus, bei dem ein translationsverschiebbares, federbeaufschlagtes Schlagstück von einer translationsverschiebbaren Trägheitsmasse über eine Sperrkugel in Richtung auf ein Ansteuerelement der Rückstrammeinrichtung freigegeben wird. Die herkömmlichen mechanischen Ansteuersysteme sind jedoch in ihren Auslösekriterien schwer beherrschbar und kaum in zuverlässig reproduzierbarer Weise sowie mit ausreichender Langzeitstabilität an die jeweiligen Einsatzbedingungen anpaßbar.

Der Erfindung liegt die Aufgabe zugrunde, einen Ansteuermechanismus für Rückstrammeinrichtungen eines Sicherheitsgurt-Rückhaltesystems oder für Gassack-Rückhaltesysteme in Fahrzeugen zur Verfügung zu stellen, dessen Ansteuerkriterien ähnlich leicht, genau und langfristig reproduzierbar eingestellt und an die jeweiligen Verhältnisse angepaßt werden können wie bei elektronischen Auslösesystemen.

Diese Aufgabe wird bei einem Ansteuermechanismus der eingangs angegebenen Art erfindungsgemäß dadurch gelöst, daß ein im Gehäuse schwenkbar gelagertes und in Richtung des Ansteuerelementes federbeaufschlagtes Schlagstück zur Betätigung dieses Ansteuerelementes vorgesehen ist, daß im Gehäuse ein Auslöseelement beweglich gelagert ist, das mit der Trägheitsmasse einteilig ausgebildet oder als getrenntes Teil mit der Trägheitsmasse verbunden ist, daß sich das Schlagstück an dem Auslöseelement über eine leichtgängig an ihm gelagerte Rolle auf einer Kurvenfläche abstützt und daß die Gestalt der Kurvenfläche, die Bewegungsbahn der Rolle bei einer Schwenkbewegung des federbeaufschlagten Schlagstücks und die Bewegungsrichtung des Auslöseelementes so aufeinander abgestimmt sind, daß:
- das Schlagstück in einer stabilen Bereitschaftsstellung im Abstand von dem Ansteuerelement gehalten ist, solange an der Trägheitsmasse keine einen vorbestimmten Wert überschreitenden Verzögerungskräfte auftreten;
- die Rolle auf der Kurvenfläche des Auslöseelements entgegen der Federbeaufschlagung des Schlagstücks abrollt, wenn an der Trägheitsmasse Verzögerungskräfte auftreten, die den vorbestimmten Wert überschreiten, und das Schlagstück bei Nachlassen der Verzögerungskräfte wieder in seine stabile Bereitschaftsstellung zurückkehrt, indem die Rolle auf der Kurvenfläche in entgegengesetzter Richtung abrollt;
   und
- unter der Wirkung von Verzögerungskräften an der Trägheitsmasse, deren Betrag den vorbestimmten Wert überschreitet und deren Integral über die Zeit einen vorbestimmten Geschwindigkeitsverlust ergibt, die Rolle auf der Kurvenfläche einen Punkt überwindet, jenseits von welchem ein Übertotpunkteffekt eintritt, durch den das Auslöseelement das Schlagstück plötzlich zur Betätigung des Ansteuerelementes freigibt.

Vergleicht man den erfindungsgemäßen Ansteuermechanismus mit einem elektronischen Auslösesystem, so entspricht der vorbestimmte Wert der Verzögerungskräfte der Schwelle, ab welcher bei einem elektronischen System die Integration beginnt. Ein elektronisches System errechnet aus dem vorgegebenen Geschwindigkeitsverlust und der auftretenden Verzögerung den Auslösezeitpunkt. Der vorbestimmte Verzögerungswert sowie der vorbestimmte Geschwindigkeitsverlust, bei dem die Auslösung erfolgen soll, können allein durch die Gestaltung der Kurvenfläche bestimmt werden. An ihrem einen Ende weist die Kurvenfläche vorzugsweise eine Endbegrenzung auf, an der die Rolle des Schlagstücks in der Bereitschaftsstellung anliegt. An diese Endbegrenzung schließt vorzugsweise ein erster Abschnitt der Kurvenfläche an, auf welchem die Rolle unter dem Einfluß von an der Trägheitsmasse auftretenden Verzögerungskräften einen Widerstand überwinden muß, welcher dem vorbestimmten Wert entspricht, damit sich die Rolle auf dem darauffolgenden Abschnitt der Kurvenflache weiterbewegen kann. Dieser darauffolgende Abschnitt der Kurvenfläche zeichnet sich dadurch aus, daß die Rolle sich nur unter dem Einfluß von den vorbestimmten Wert überschreitenden Verzögerungskräften weiterbewegt, bei nachlassenden Verzögerungskräften aber zurück in Richtung ihrer Bereitschaftsstellung rollt. Die Steilheit dieses Abschnittes der Kurvenfläche ist gering und so bemessen, daS die Rolle gegen nahezu gleichbleibenden oder stetig zunehmenden Widerstand weiterrollt und bei nachlassenden Verzögerungskräften auf der Kurvenfläche zurückrollt. Erst wenn das Ende dieses Abschnitts der Kurvenfläche erreicht ist, tritt ein Übertotpunkteffekt ein, der bei praktischen Ausführungsformen dadurch erreicht wird, daß die Kurvenfläche mit einem abrupten Rücksprung endet.

Ein nahezu konstanter Widerstand, gegen den die Rolle sich auf der Kurvenfläche weiterbewegt, wird bei Ausführungsformen mit einem schwenkbaren Ansteuerelement durch eine Kurvenfläche erreicht, die einer archimedischen Spirale von geringer Steigung entspricht.

Je leichtgängiger und genauer die Rolle, das Schlagstuck und das Auslöseelement gelagert sind, desto genauer können die Auslösekriterien des erfindungsgemäßen Ansteuermechanismus eingestellt werden. Es ist daher bei bevorzugten Ausführungsformen vorgesehen, diese Elemente auf Wälzlagern zu lagern. Weiterhin ist vorzugsweise das Gehäuse des Ansteuermechanismus weitgehend hermetisch gekapselt, um äußere Einflüsse auf die Leichtgängigkeit der Lagerung über einen langen Zeitraum von 10 Jahren und mehr auszuschließen.

Mehrere vorteilhafte Ausführungsformen der Erfindung sind in den Unteransprüchen angegeben.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: einen schematischen Schnitt einer ersten Ausführungsform des Ansteuermechanismus im Bereitschaftszustand;
- Fig. 2: eine Schnittansicht desselben Ansteuermechanismus im ausgelösten Zustand;
- Fig. 3: einen Schnitt einer zweiten Ausführungsform des Ansteuermechanismus im Bereitschaftszustand;
- Fig. 4: einen Schnitt der in Fig. 3 gezeigten Ausführungsform im ausgelösten Zustand;
- Fig. 5: eine vergrößerte schematische Darstellung einer Steuerkurve am Auslöseelement des Ansteuermechanismus;
- Fig. 6: ein Diagramm, das eine typische Crash-Kurve zeigt;
- Fig. 7: eine Schnittansicht einer dritten Ausführungsform im Bereitschaftszustand; und
- Fig. 8 bis 10: weitere Ausführungsvarianten.

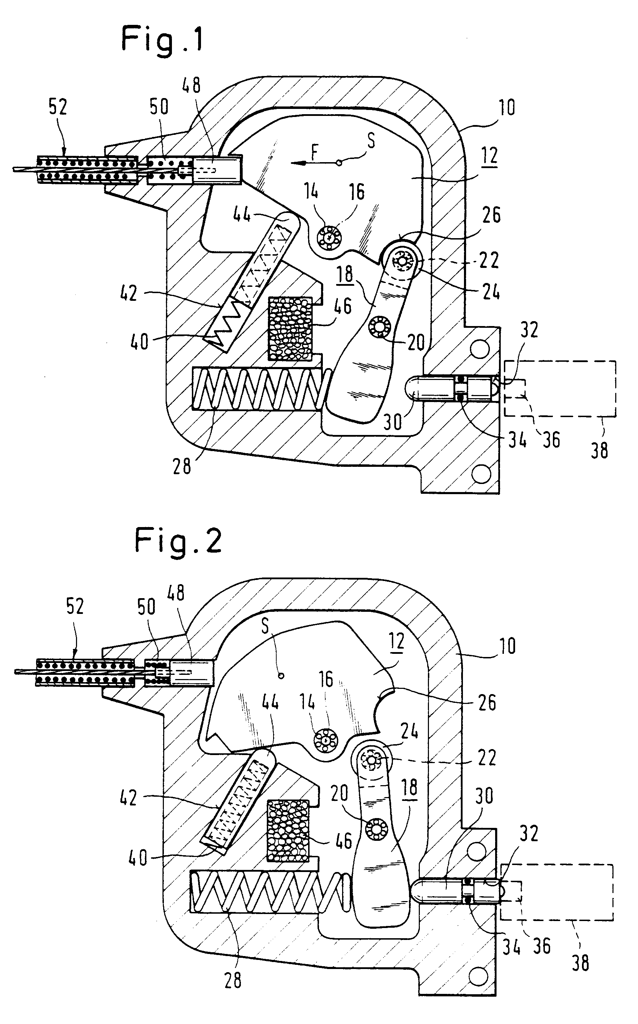

Bei der in den Fig. 1 und 2 gezeigten Ausführungsform des Ansteuermechanismus ist in einem nach außen hermetisch abgedichteten Gehäuse 10 eine fahrzeugsensitive Trägheitsmasse 12 auf einem Wälzlager 14 leichtgängig schwenkbar um eine Achse 16 gelagert. Der Schwerpunkt S der Trägheitsmasse 12 liegt im Einbauzustand des Gehäuses 10 zumindest annähernd senkrecht über der Achse 16, um Einflüsse durch in Vertikalrichtung wirkende Stöße weitgehend auszuschalten. Ferner ist in dem Gehäuse 10 ein Schlagstück 18 in Form eines doppelarmigen Hebels mittels eines Wälzlagers 20 schwenkbar gelagert. das Schlagstück 18 ist am freien Ende seines der Trägheitsmasse 12 zugewandten Hebelarmes mit einer auf einem Wälzlager 22 leichtgängig drehbar gelagerten Rolle 24 versehen. Diese Rolle 24 stützt sich an ihrem Umfang auf einer Kurvenfläche 26 der Trägheitsmasse 12 ab. Der andere Hebelarm des Schlagstücks 18 wird durch eine Druckfeder 28 in Richtung zu einem Schlagbolzen 30 hin beaufschlagt, der in einer Bohrung 32 des Gehäuses 10 verschiebbar gelagert ist, wobei die Abdichtung des Gehäuses 10 durch einen O-Ring 34 gewährleistet ist. der Schlagbolzen 30 ragt in das Innere des Gehäuses 10 hinein. Er wirkt bei der hier gezeigten Ausführungsform mit dem Schlagzünder 36 eines pyrotechnischen Gasgenerators 38 zusammen, der seinerseits zur Aktivierung einer (nicht gezeigten) Rückstrammeinrichtung vorgesehen ist. Die Trägheitsmasse 12 steht bei der gezeigten Ausführungsform unter der Wirkung einer Rückstellfeder 40, die in einer Bohrung 42 des Gehäuses 10 aufgenommen ist und auf einen Stößel 44 drückt, der sich mit einem abgerundeten Kopfstück auf der ihm gegenüberliegenden Fläche der Trägheitsmasse 12 abstützt. Eine feuchtigkeitsabsorbierende, hygroskopische Substanz 46 ist in einer Aussparung im Inneren des Gehäuses 10 angeordnet. In dem in Fig. 1 gezeigten Zustand befindet sich die Trägheitsmasse 12 in einer stabilen Bereitschaftsstellung, in der sie durch einen Schieber 48 gehalten wird, der in einer Bohrung 50 des Gehäuses 10 geführt ist und über einen Seilzug 52 betätigt wird. Die durch den Schieber 50 bewirkte Arretierung der Trägheitsmasse 12 in ihrer Bereitschaftsstellung ist nur in bestimmten Betriebszuständen wirksam. Beispielsweise kann der in Fig. 1 gezeigte Ansteuermechanismus unmittelbar an einem Fahrzeugsitz angeordnet werden, um eine in den Sitz integrierte Rückstrammeinrichtung anzusteuern. Bei einer Sitzverstellung können Stöße von erheblicher Intensität nicht ausgeschlossen werden. Wenn der Schieber 50 über den Seilzug 52 an den Sitzverstellungshebel angekoppelt wird, kann die Trägheitsmasse 12 in ihrer Bereitschaftsstellung gesichert werden, um eine Sitzverstellung ohne jegliche Gefahr einer unbeabsichtigten Auslösung der Rückstrammeinrichtung zu ermöglichen. Auch im Bereich der Hereinführung des Seilzuges 52 in das Gehäuse 10 sind Maßnahmen zur hermetischen Abdichtung nach außen vorgesehen.

Wenn der Schieber 48, wie in Fig. 2 gezeigt, die Trägheitsmasse 12 freigibt, verbleibt diese dennoch in ihrer stabilen Bereitschaftslage, da die Kurvenfläche 26, auf der sich die Rolle 24 abstützt, eine solche Neigung in bezug auf die durch das Schlagstück 18 umgelenkte und übersetzte Kraft der Feder 28 aufweist, daß die Trägheitsmasse 12 bestrebt ist, im Uhrzeigersinn (in Fig. 1) zu verschwenken. Dieses Bestreben kann durch die Feder 40 noch unterstützt werden. Eine Verschwenkung der Trägheitsmasse 12 im Uhrzeigersinn ist aber nicht möglich, weil die Kurvenfläche 26 eine steile Endbegrenzung aufweist, deren Fläche quer zur Längsachse des Schlagstücks 18 orientiert ist.

Wenn nun unter der Wirkung einer Fahrzeugverzögerung Trägheitskräfte am Schwerpunkt S der Trägheitsmasse angreifen, wie in Fig. 1 durch einen Pfeil F angedeutet, und wenn diese Trägheitskräfte einen vorbestimmten Wert überschreiten, beginnt die Trägheitsmasse 12, sich entgegen der Wirkung der Feder 40 sowie der Feder 28 entgegen dem Uhrzeigersinn zu verschwenken, wobei die Rolle 24 auf der Kurvenfläche 26 gegen nahezu konstanten Widerstand abrollt. Dauern die Verzögerungskräfte an, bis ein vorbestimmter Geschwindigkeitsverlust eingetreten ist, so bewegt sich die Rolle 24 auf der Kurvenfläche 26 bis zu einem Endpunkt dieser Kurvenfläche, an dem diese einen abrupten Rücksprung in Richtung der Achse 16 bildet. Es tritt dann ein Übertotpunkteffekt ein, indem die Rolle 24 plötzlich freigegeben wird und das Schlagstück 18 ohne jede Behinderung durch die Feder 28 beschleunigt wird. Die recht stark bemessene Feder 28 beschleunigt das Schlagstück 18 auf einem Schwenkweg von wenigen Winkelgraden in solchem Maße, daß dieses mit hoher kinetischer Energie auf dem Schlagbolzen 30 auftrifft und diesen in den Schlagzünder 36 des pyrotechnischen Gasgenerators 38 eintreibt.

Wenn aber während dieses Vorganges die Verzögerungskräfte unter den vorbestimmten Wert absinken, so rollt die Rolle 24 auf der Kurvenfläche 26 zurück in Richtung der stabilen Bereitschaftsstellung.

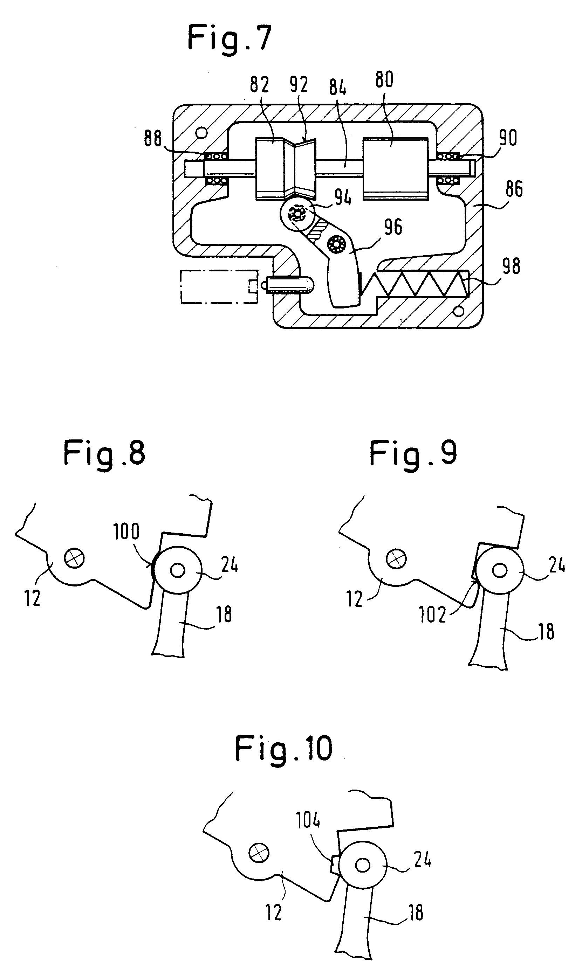

Bei der beschriebenen Ausführungsform des Ansteuermechanismus wird durch die Anwesenheit der Feder 40 und die Steilheit der Kurvenfläche ein bestimmter Schwellwert definiert, der überwunden werden muß, bevor die Abrollbewegung der Rolle 24 auf der Kurvenfläche 26 beginnt. Auf eine solche Feder kann aber verzichtet werden, wenn die Kurvenfläche 26 in geeigneter Weise gestaltet wird. Verschiedene Ausführungsformen, bei denen eine solche Feder entfallen kann, werden weiter unten unter Bezugnahme auf die Figuren 8 bis 10 erläutert.

Bei der Ausführungsform nach den Fig. 1 und 2 bildet die Trägheitsmasse 12 zugleich ein Auslöseelement, wodurch eine kompakte Bauform des gesamten Ansteuermechanismus erzielt wird. Allerdings ist bei dieser Ausführungsform die Orientierung des Gehäuses 10 im Raume innerhalb enger Grenzen vorgegeben.

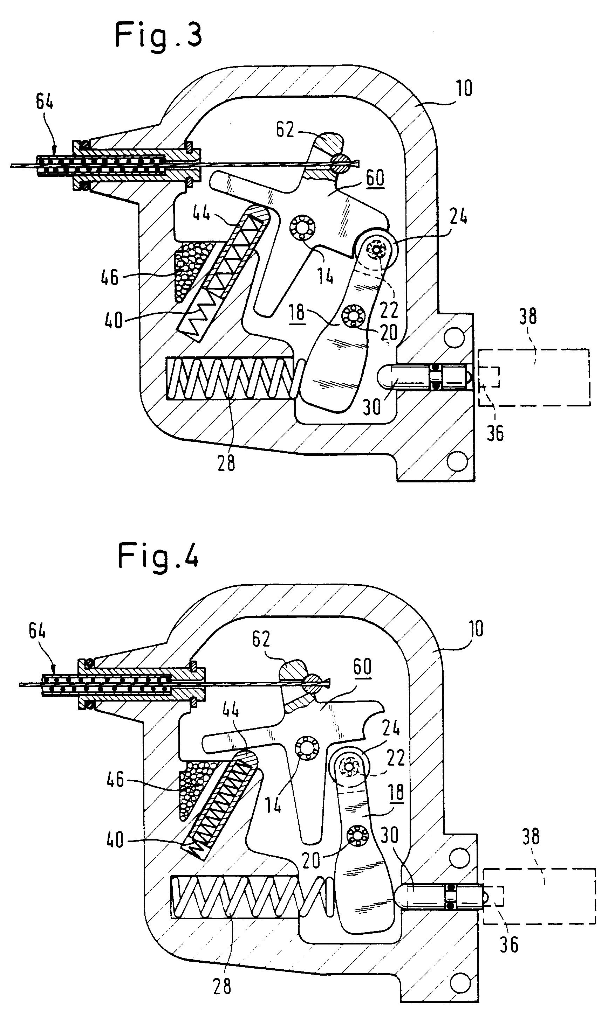

Bei der Ausführungsform nach den Fig. 3 und 4 entfällt diese Einschränkung. Bei dieser Ausführungsform ist die Trägheitsmasse gesondert von einem Auslöseelement 60 angeordnet, welches als massearmer mehrarmiger Hebel ausgebildet ist. An dem einen Arm 62 dieses Auslöseelements 60 greift über einen Seilzug 64 die (nicht gezeigte) Trägheitsmasse an, die in beliebiger Weise, aber leichtgängig translationsverschiebbar oder verschwenkbar geführt ist. Ansonsten sind Anordnung und Wirkungsweise bei dieser Ausführungsform analog zu der Ausführungsform nach den Fig. 1 und 2. Das Gehäuse 10 kann nun in nahezu beliebiger Orientierung eingebaut werden.

Bei beiden Ausführungsformen wird durch die hermetische Abdichtung des Gehäuses 10 in Verbindung mit der feuchtigkeitsabsorbierenden Wirkung der hygroskopischen Substanz 46 eine hohe Langzeitkonstanz der Einstellung der Auslösekriterien erreicht. Die leichtgängige und präzise Lagerung aller kritischen Funktionsteile kann so durch keinerlei Verunreinigung, Korrosion oder dgl. beeinträchtigt werden.

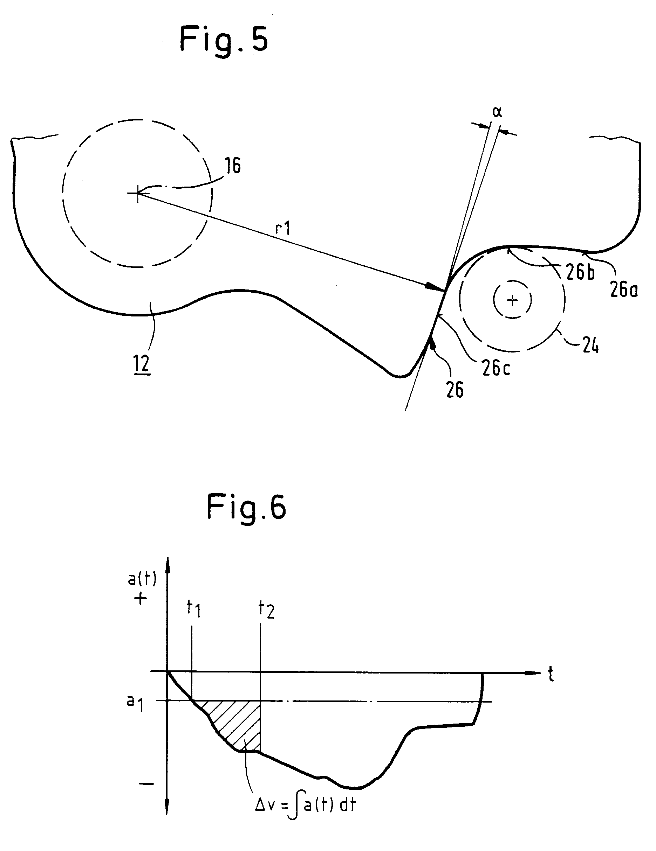

Unter Bezugnahme auf die Fig. 5 und 6 werden nun Einzelheiten zur Gestaltung der Kurvenfläche 26 im Hinblick auf die Einstellung des gewünschten Auslöseverhaltens erläutert.

Die Fig. 5 zeigt in vergrößertem Maßstab den Teil der Trägheitsmasse 12, an dem die Kurvenfläche 26 gebildet ist. Diese Kurvenfläche 26 weist an ihrem einen Ende eine Endbegrenzung 26a für die Rolle 24 auf. An diese Endbegrenzung 26a schließt ein konkaver Abschnitt 26b der Kurvenfläche an. Etwa ab einem Punkt, der durch einen Radius r1 in bezug auf die Schwenkachse 16 der Trägheitsmasse 12 bestimmt ist, geht die Kurvenfläche in einen Abschnitt 26c über, der durch eine archimedische Spirale beschrieben wird. In jedem Punkt der Kurvenfläche auf diesem Abschnitt 26c bildet diese Fläche mit einer Tangente an den Kreis mit dem entsprechenden Radius einen Winkel α von annähernd gleicher Größe. Es wird daran erinnert, daß in jedem Punkt einer archimedischen Spirale der Radiusvektor und Polarwinkel einander proportional sind. Eine gleichförmige Drehung der Trägheitsmasse 12 um ihre Achse 16 bewirkt daher auf dem Abschnitt 26c der Kurvenfläche eine gleichförmige Bewegung der Rolle 24 in Radialrichtung. Die Rolle 24 läuft daher auf der Kurvenfläche 26 gegen stetig, aber schwach wachsenden Widerstand, wenn sich die Trägheitsmasse 12 unter der Wirkung von anwachsenden Verzögerungen entgegen dem Uhrzeigersinn dreht. Die an jedem Punkt der Kurvenfläche 26 vorhandene Neigung gegenüber einer Tangentialen an den Kreis mit entsprechendem Radius bewirkt aber, daS die Rolle 24 bestrebt ist, in ihre stabile Anfangsstellung zurückzurollen, sobald die am Schwerpunkt der Trägheitsmasse wirksamen Trägheitskräfte nachlassen.

Erst wenn die Rolle 24 das Ende des Abschnitts 26c der Kurvenfläche erreicht hat, tritt ein Übertotpunkteffekt ein, da die Kurvenfläche von der Rolle zurückweicht und ihre durch die Feder 28 beschleunigte Schwenkbewegung freigibt.

Die Fig. 6 zeigt vereinfacht eine typische "Crash-Kurve", also die zeitliche Entwicklung der bei einem Fahrzeugaufprall auftretenden Verzögerungswerte. Bis zu einem Zeitpunkt t₁ bleibt die Verzögerung im Betrag unterhalb einem Wert a₁. Erst ab diesem Verzögerungswert a₁ soll die Trägheitsmasse 12 unter der Wirkung der entsprechenden Trägheitskräfte mit ihrer Schwenkbewegung beginnen. Dieser Verzögerungswert a₁ wird durch die Steilheit der Kurvenfläche 26 und gegebenenfalls zusätzlich durch die Feder 40 (Fig. 1, 2) eingestellt. Die Schwenkbewegung der Trägheitsmasse 12 entgegen dem Uhrzeigersinn dauert an, solange der Verzögerungswert a₁ im Betrag überschritten wird. Sinkt die Verzögerung unter den Wert a₁ ab, erfolgt die Schwenkbewegung der Trägheitsmasse 12 in entgegengesetzter Richtung. Bleibt der Betrag der Verzögerung aber bis zu einem Zeitpunkt t₂ oberhalb des Wertes a₁, so ist ein vorbestimmter Geschwindigkeitsverlust Δv eingetreten, und die Trägheitsmasse 12 wird bis zur Überschreitung ihrer Übertotpunktlage verschwenkt. Dieser Geschwindigkeitsverlust Δv ist der Wert des Integrals der den vorbestimmten Wert a₁ überschreitenden Verzögerung über die Zeit. Er beträgt typischerweise zwischen 0,5 und 1,0 m/sec. und ist je nach Fahrzeugtyp verschieden.

Während der Rollbewegung der Rolle 24 auf dem Abschnitt 26c der Kurvenfläche erfolgt nur eine sehr kleine Schwenkbewegung des Schlagstücks 18. Die Rolle 24 wird daher mit annähernd konstanter Kraft durch die Feder 28 gegen die Kurvenfläche gedrückt. Durch die Neigung der Kurvenfläche wird diese nahezu konstante Andruckkraft in eine ebenfalls nahezu konstante Rückstellkraft umgesetzt, die bestrebt ist, die Trägheitsmasse 12 in ihre Ruhelage zurückzuschwenken. Sobald aber und solange die am Schwerpunkt S der Trägheitsmasse 12 angreifenden Trägheitskräfte diese Rückstellkraft überwinden, wird die Trägheitsmasse entgegen dem Uhrzeigersinn verschwenkt.

Bei der in Fig. 7 gezeigten Ausführungsform sind ein zylindrischer Massekörper 80 und ein Auslöseelement 82 auf einer Stange 84 befestigt, die im Gehäuse 86 des Ansteuermechanismus mittels zweier koaxialer Bohrungen und darin angeordneter Wälzlagerelemente 88, 90 leichtgängig und präzise translationsverschiebbar geführt ist. Am Außenumfang des Auslöseelements 82 ist eine Kurvenfläche 92 gebildet, an welcher eine Rolle 94 anliegt, die am freien Ende des Schlagstücks 96 drehbar gelagert ist. Das Schlagstück 96 wird durch eine Druckfeder 98 in solchem Sinne beaufschlagt, daß die Rolle 94 gegen die Kurvenfläche 92 angedrückt wird. Die Kurvenfläche 92 bildet einen Kegelstumpf. Sie weist daher gegenüber der Rolle 94 eine konstante Neigung auf. Das Auslöseverhalten ist bei dieser Ausführungsform des Ansteuermechanismus daher mit dem bei den zuvor beschriebenen Ausführungsformen vergleichbar.

Die Fig. 8 bis 10 zeigen schematisch verschiedene Ausführungsvarianten, bei denen der vorbestimmte Verzögerungswert, ab welchem die Schwenkbewegung der Trägheitsmasse einsetzt, durch die Gestaltung der Kurvenfläche bestimmt wird. Gemäß Fig. 8 weist die Kurvenfläche eine Mulde 100 auf, deren Form annähernd an den Außenumfang der Rolle 24 angepaßt ist. Gemäß Fig. 9 ist in der Kurvenfläche eine quer zur Laufrichtung der Rolle 24 orientierte Kante 102 gebildet. Gemäß Fig. 10 ist in der Kurvenfläche eine durch zwei Kanten begrenzte Vertiefung 104 ausgebildet. Allen Ausführungen ist gemeinsam, daß eine Schwenkbewegung der Trägheitsmasse 12 erst erfolgen kann, nachdem eine Hemmschwelle überwunden ist.

Bei den oben beschriebenen Ausführungsformen wird davon ausgegangen, daß die Steuerkurve an der Trägheitsmasse bzw. an dem Auslöseelement gebildet und die Rolle am Schlagstück gelagert ist. Grundsätzlich kann die Steuerkurve auch am Schlagstück gebildet und die Rolle am Auslöseelement gelagert sein. Ferner können über das Ansteuerelement 30 beliebige Systeme angesteuert werden, beispielsweise auch rein mechanisch arbeitende Rückstrammvorrichtungen.

## Patentansprüche

1. Ansteuermechanismus für Rückstrammeinrichtungen eines Sicherheitsgurt-Rückhaltesystems oder für Gassack-Rückhaltesysteme in Fahrzeugen, mit einer in einem Gehäuse (10) schwenkbar oder translationsverschiebbar gelagerten, fahrzeugsensitiven Trägheitsmasse (12) und einem Ansteuerelement (30), das mit dem Rückhaltesystem in Wirkverbindungen steht, dadurch gekennzeichnet, daß ein im Gehäuse (10; 86) schwenkbar gelagertes und in Richtung des Ansteuerelementes (30) federbeaufschlagtes Schlagstück (18; 96) zur Betätigung dieses Ansteuerelementes vorgesehen ist, daß im Gehäuse (10) ein Auslöseelement (60; 82) beweglich gelagert ist, das mit der Trägheitsmasse (12; 80) einteilig ausgebildet oder als getrenntes Teil mit der Trägheitsmasse (12; 80) verbunden ist, daß sich das Schlagstück (18; 96) an dem Auslöseelement (60; 82) über eine leichtgängig an ihm gelagerte Rolle (24; 94) auf einer Kurvenfläche (26; 92) abstützt und daß die Gestalt der Kurvenfläche (26; 92), die Bewegungsbahn der Rolle (24; 94) bei einer Schwenkbewegung des federbeaufschlagten Schlagstücks (18; 96) und die Bewegungsrichtung des Auslöseelementes (60; 82) so aufeinander abgestimmt sind, daß:
- das Schlagstück (18; 96) in einer stabilen Bereitschaftsstellung im Abstand von dem Ansteuerelement (30) gehalten ist, solange an der Trägheitsmasse (12; 80) keine einen vorbestimmten Wert (a₁) überschreitenden Verzögerungskräfte auftreten;
- die Rolle (24; 94) auf der Kurvenfläche (26; 92) des Auslöseelements (60; 82) entgegen der Federbeaufschlagung des Schlagstucks (18; 96) unter Überwindung einer Rückstellkraft abrollt, wenn an der Trägheitsmasse (12; 80) Verzögerungskräfte auftreten, die den vorbestimmten Wert (a₁) überschreiten, und das Schlagstück (18; 96) bei Nachlassen der Verzögerungskräfte wieder in seine stabile Bereitschaftsstellung zurückkehrt, indem die Rolle (24; 94) auf der Kurvenfläche (26; 92) in entgegengesetzter Richtung abrollt; und
- unter der Wirkung von Verzögerungskräften an der Trägheitsmasse (12; 80), deren Betrag den vorbestimmten Wert (a₁) überschreitet und deren Integral über die Zeit einen vorbestimmten Geschwindigkeitsverlust (Δv) ergibt, die Rolle (24; 94) auf der Kurvenfläche (26; 92) einen Punkt überwindet, jenseits von welchem ein Übertotpunkteffekt eintritt, durch den das Auslöseelement (60; 82) das Schlagstuck (18; 96) plötzlich zur Betätigung des Ansteuerelementes (30) freigibt.

2. Ansteuermechanismus nach Anspruch 1, dadurch gekennzeichnet, daß die Trägheitsmasse über ein Umlenkelement kraftschlüssig mit dem Ausloseelement (60) verbunden ist, welches seinerseits als massearmes Hebelteil ausgebildet und zumindest annähernd in seinem Schwerpunkt gelagert ist.

3. Ansteuermechanismus nach Anspruch 1 oder 2, dadurch gekennzeichnet, daß die Trägheitsmasse über einen Seilzug (64) mit dem Auslöseelement (60) verbunden ist.

4. Ansteuermechanismus nach einem der vorstehenden Ansprüche, dadurch gekennzeichnet, daß die Rolle (24) über ein Wälzlager (22) an dem Schlagstück (18) drehbar gelagert ist.

5. Ansteuermechanismus nach einem der vorstehenden Ansprüche, dadurch gekennzeichnet, daß das Auslöseelement (60) bzw. die Trägheitsmasse (12) über ein Wälzlager (14) im Gehäuse (10) schwenkbar gelagert ist.

6. Ansteuermechanismus nach einem der vorstehenden Ansprüche, dadurch gekennzeichnet, daß das Gehäuse (10; 86) weitgehend hermetisch abgedichtet ist.

7. Ansteuermechanismus nach Anspruch 6, dadurch gekennzeichnet, daß in dem Gehäuse (10) eine feuchtigkeitsabsorbierende hygroskopische Substanz (46) angeordnet ist.

8. Ansteuermechanismus nach einem der vorstehenden Ansprüche, dadurch gekennzeichnet, daß an dem Auslöseelement (60) bzw. an der Trägheitsmasse (12) eine Feder (40) angreift, die den an der Trägheitsmasse bei Verzögerung auftretenden und auf das Auslöseelement übertragenen Kräften entgegenwirkt.

9. Ansteuermechanismus nach einem der vorstehenden Ansprüche, dadurch gekennzeichnet, daß die Kurvenfläche (26) einen flachen oder schwach konvex gekrümmten Abschnitt (26c) aufweist, der sich in Richtung der Abrollbewegung erstreckt und an jedem Punkt gegenüber einer zur Längsachse des Schlagstücks (18) senkrechten Ebene geneigt ist.

10. Ansteuermechanismus nach Anspruch 9, dadurch gekennzeichnet, daß der Neigungswinkel (α) zwischen der Kurvenfläche (26) und der genannten Ebene im wesentlichen über die Erstreckung des Abschnitts (26c) konstant ist.

11. Ansteuermechanismus nach Anspruch 9 oder 10, dadurch gekennzeichnet, daß der Abschnitt auf seiner einen Seite durch einen Endanschlag (26a) und auf seiner anderen Seite durch einen abrupten Rücksprung begrenzt ist.

12. Ansteuermechanismus nach einem der vorstehenden Ansprüche, dadurch gekennzeichnet, daß die Kurvenfläche (26) in ihrem der Bereitschaftsstellung des Schlagstücks (18) entsprechenden Bereich eine Vertiefung (100; 104) aufweist, deren Tiefe eine Hemmschwelle definiert, die dem vorbestimmten Verzögerungswert (a₁) entspricht.

13. Ansteuermechanismus nach Anspruch 12, dadurch gekennzeichnet, daß die Vertiefung eine quer zur Laufrichtung der Rolle gerichtete Kante (102) aufweist.

## Claims

1. Trigger mechanism for tightening means of a safety belt restraining system or for gas-bag restraining systems in vehicles, comprising a vehicle-sensitive inertia mass (12) mounted pivotally or translationally displaceably in a housing (10) and a trigger element (30) which is in operative connection with the restraining system, characterized in that a strike piece (18; 96) pivotally mounted in the housing (10; 86) and spring-loaded in the direction of the trigger element (30) is provided for actuating said trigger element, that in the housing (10) a release element (60; 82) is movably mounted which is formed integral with the inertia mass (12:80) or as a seperate element connected to the inertia mass (12; 80), that the strike piece (18; 96) bears via a roller (24; 94) mounted easily movably thereon on a cam face (26; 92) and that the shape of the cam face (26; 92), the movement path of the roller (24; 94) in the pivot movement of the spring-loaded strike piece (18; 96) and the direction ofmovement of the release element (60; 82) are adapted to each other in such a manner that
- the strike piece (18; 96) is held in a stable readiness position spaced from the trigger element (30) as long as no deceleration foreces exceeding a predetermined value (a1) occur at the inertia mass (12; 80);
- the roller (24; 94) rolls on the cam face (26; 92) of the release element (60; 82) oppositely to the spring action on the strike piece (18; 96) when deceleration forces exceeding the predetermined value (a1) occur at the inertia mass (12; 80), and when the deceleration forces decrease the strike piece (18; 96) again returns to its stable readiness position in that the roller (24; 94) rolls on the cam face (26; 92) in the opposite direction; and
- under the action of deceleration forces at the inertia mass (12; 80) having a magnitude exceeding the predetermined value (a1) and an integral with respect to time giving a predetermined velocity loss (v), the roller (24; 94) on the cam face (26; 92) overcomes a point beyond which an over-deadcentre effect occurs by which the release element (60; 82) suddenly releases the strike piece (18; 96) for actuation of the trigger element (30).

2. Trigger mechanism according to claim 1, characterized in that the inertia mass is connected via a deflection element in force-locking manner to the release element (60) which in turn is formed as low-mass lever member and mounted at least approximately in its centre of gravity.

3. Trigger mechanism according to claim 1 or 2, characterized in that the inertia mass is connected via a sheathed cable (64) to the release element (60).

4. Trigger mechanism according to any one of the preceding claims, characterized in that the roller (24) is rotatably mounted on the strike piece (18) via a rolling bearing (22).

5. Trigger mechanism according to any one of the preceding claims, characterized in that the release element (60) or the inertia mass (12) is pivotally mounted via a rolling bearing (14) in the housing (10).

6. Trigger mechanism according to any one of the preceding claims, characterized in that the housing (10; 86) is substantially hermetically sealed.

7. Trigger mechanism according to claim 6, characterized in that the in the housing (10) a moisture-absorbing hygroscopic substance (46) is arranged.

8. Trigger mechanism according to any onä of the preceding claims, characterized in that a spring (40) which opposes the forces occurring at the inertia mass on deceleration and transmitted to the release element engages said release element (60) or the inertia mass (12).

9. Trigger mechanism according to any one of the preceding claims, characterized in that the cam face (26) has a flat or weakly convexly curved portion (26c) which extends in the direction of the rolling movement and at every point is inclined to a plane perpendicular to the longitudinal axis of the strike piece (18).

10. Trigger mechanism according to claim 9, characterized in that the inclination angle () between the cam face (26) and said plane is substantially constant over the extent of the portion (26c).

11. Trigger mecanism according to claim 9 or 10, characterized in that the portion is limited on its one side by an end stop (26a) and on its other side by an abrupt jump back.

12. Trigger mechanism according to any one of the preceding claims, characterized in that the cam face (26) in its region corresponding to the readiness position of the strike piece (18) comprises a depression (100; 104), the depth of which defines a retarding threshold corresponding to the predetermined deceleration value (a1).

13. Trigger mechanism according to claim 12, characterized in that the depression comprises an edge (102) directed transversely of the running direction of the roller.

## Revendications

1. Mécanisme d'amorçage pour des dispositifs de rétraction d'un système de retenue d'une ceinture de sécurité ou pour des systèmes de retenue de poches à gaz dans des véhicules, comprenant une masse d'inertie (12) répondant au véhicule et montée pivotante ou déplaçable en translation dans un boitier (10), ainsi gu'un élément d'amorçage (30) qui est en relation fonctionnelle avec le système de retenue, caractérisé en ce qu'une pièce de percussion (18 ; 96) montée pivotante dans le boîtier (10 ; 86) et soumise à la contrainte d'un ressort orientée vers l'élément d'amorçage (30) est prévue pour l'actionnement de cet élément d'amorçage, en ce qu'un élément de déclenchement (60 ; 82) monté mobile dans le boitier (10) est réalisé en une pièce avec la masse d'inertie (12 ; 80) ou relié sous forme d'une pièce séparée à la masse d'inertie (12 ; 80), en ce que la pièce de percussion (18 ; 96) prend appui par un galet (24 ; 94) monté librement rotatif sur elle contre l'élément de déclenchement (60 ; 82) sur une surface de came (26 ; 92) et en ce que la forme de la surface de came (26 ; 92), la voie de déplacement du galet (24 ; 94) lors d'un mouvement de pivotement de la pièce de percussion (18 ; 96) soumise à la contrainte d'un ressort et la direction du déplacement de l'élément de déclenchement (60 ; 82) sont coordonnées les unes en fonction des autres de manière que :
- la pièce de percussion (18 ; 96) soit tenue à une position stable d'attente à distance de l'élément d'amorçage (30) aussi longtemps que la masse d'inertie (12 ; 80) ne subit aucune force de décélération dépassant une valeur prédéterminée (a₁) ;
- le galet (24 ; 94) roule sur la surface de came (26 ; 92) de l'élément de déclenchement (60 ; 82) à l'encontre de la contrainte par ressort de la pièce de percussion (18 ; 96) en surmontant une force de rappel lorsque la masse d'inertie (12 ; 80) subit des forces de décélération qui dépassent la valeur prédéterminée (a₁) et la pièce de percussion (18 ; 96) retourne à sa position stable d'attente lorsque les forces de décélération faiblissent, le galet (24 ; 94) roulant alors sur la surface de came (26 ; 92) dans le sens inverse ; et
- lorsque la masse d'inertie (12 ; 80) subit des forces de décélération dont l'importance dépasse la valeur prédéterminée (a₁) et dont l'intégrale en fonction du temps donne une perte prédéterminée de vitesse (Δv), le galet (24 ; 94) franchisse sur la surface de came (26 ; 92) un point au-delà duquel apparait un effet de passage par un point d'instabilité avec pour conséquence que l'élément de déclenchement (60 ; 82) libère brusquement la pièce de percussion (18 ; 96) pour l'actionnement de l'élément d'amorçage (30).

2. Mécanisme d'amorçage selon la revendication 1, caractérisé en ce que la masse d'inertie est reliée en liaison dynamique par un élément de renvoi à l'élément de déclenchement (60) qui, de son côté, est conformé en levier ayant une faible masse et monté au moins approximativement en son centre de gravité.

3. Mécanisme d'amorçage selon la revendication 1 ou 2, caractérisé en ce que la masse d'inertie est reliée à l'élément de déclenchement (60) par un câble de transmission (64).

4. Mécanisme d'amorçage selon l'une des revendications précédentes, caractérisé en ce que le galet (24) est monté rotatif au moyen d'un roulement (22) sur la pièce de percussion (18).

5. Mécanisme d'amorçage selon l'une des revendications précédentes, caractérisé en ce que l'élément de déclenchement (60) ou la masse d'inertie (12) est monté pivotant au moyen d'un roulement (14) dans le boîtier (10).

6. Mécanisme d'amorçage selon l'une des revendications précédentes, caractérisé en ce que le boitier (10 ; 86) est isolé pratiquement hermétiquement.

7. Mécanisme d'amorçage selon la revendication 6, caractérisé en ce qu'une substance hygroscopique (46) absorbant l'humidité est placée dans le boîtier (10).

8. Mécanisme d'amorçage selon l'une des revendications précédentes, caractérisé en ce qu'un ressort (40) attaquant l'élément de déclenchement (60) ou la masse d'inertie (12) s'oppose aux forces que subit la masse d'inertie en cas de décélération et qui sont transmises à l'élément de déclenchement.

9. Mécanisme d'amorçage selon l'une des revendications précédentes, caractérisé en ce que la surface de came (26) comporte un segment plat ou faiblement convexe (26c) qui s'étend dans la direction du mouvement de roulement et est incliné en chaque point par rapport à un plan perpendiculaire à l'axe longitudinal de la pièce de percussion (18).

10. Mécanisme d'amorçage selon la revendication 9, caractérisé en ce que l'angle d'inclinaison (α) entre la surface de came (26) et le plan mentionné est sensiblement constant sur la longueur du segment (26c).

11. Mécanisme d'amorçage selon la revendication 9 ou 10, caractérisé en ce que le segment est délimité d'un côté par une butée de fin de course (26a) et, de l'autre côté, par un retrait abrupt.

12. Mécanisme d'amorçage selon l'une des revendications précédentes, caractérisé en ce que la surface de came (26) comporte dans sa zone correspondant à la position d'attente de la pièce de percussion (18) une cavité (100 ; 104) dont la profondeur définit un seuil d'immobilisation qui correspond à la valeur prédéterminée (a₁) de décélération.

13. Mécanisme d'amorçage selon la revendication 12, caractérisé en ce que la cavité comporte une arête (102) orientée perpendiculairement à la direction de roulement du galet.
